(19) Europäisches Patentamt
European Patent Office
Office européen des brevets

(11) EP 0 555 877 B1

(12) EUROPEAN PATENT SPECIFICATION

(45) Date of publication and mention
of the grant of the patent:
**01.05.1996 Bulletin 1996/18**

(51) Int Cl.⁶: **F16D 69/02**

(21) Application number: **93102275.0**

(22) Date of filing: **12.02.1993**

(54) **Brake structure for a bicycle**

Bremsstruktur für ein Fahrrad

Structure de frein pour bicyclette

(84) Designated Contracting States:
**DE FR GB IT**

(30) Priority: **14.02.1992 JP 28555/92**
**13.03.1992 JP 55314/92**

(43) Date of publication of application:
**18.08.1993 Bulletin 1993/33**

(73) Proprietor: **SHIMANO INC.**
**Osaka (JP)**

(72) Inventors:
• **Nagano, Masashi**
**Izumi-shi, Osaka (JP)**
• **Ueda, Toshiyuki**
**Sakai-shi, Osaka (JP)**
• **Ohta, Katsuyuki**
**Sakai-shi, Osaka (JP)**

(74) Representative:
**Herrmann-Trentepohl, Werner, Dipl.-Ing.**
**Patentanwälte Herrmann-Trentepohl,**
**Kirschner, Grosse, Bockhorni & Partner**
**Forstenrieder Allee 59**
**D-81476 München (DE)**

(56) References cited:
DE-A- 2 444 433     FR-A- 1 496 120
FR-A- 2 299 375     FR-A- 2 346 394
FR-A- 2 387 838

**Description**

BACKGROUND OF THE INVENTION FIELD OF THE INVENTION

The present invention relates to a brake structure for a bicycle.

DESCRIPTION OF THE RELATED ART

A bicycle brake has brake elements operable through a brake lever to contact a wheel rim. Conventionally, as disclosed in Japanese Patent Publication No. 57-26702, the brake elements comprise a mixture of a binder whose main component is rubber polymer, and granules of a metallic compound. These brake elements, even at wet times, produce a like braking effect as at dry times.

A very strong force is required to press the brake elements upon the wheel or other body to be braked. In producing the high pressure required, in the case of a bicycle, for example, an increased manual operating force must be applied to the brake lever per se. With the conventional construction, it is difficult to apply the high pressure to produce a sufficient braking force.

Document FR-A-2 387 838 discloses a material for bicycle brakes which includes a metal oxide with a rubber. This produces a brake which leads to a higher brake force during operation in a wet environment.

SUMMARY OF THE INVENTION

An object of the present invention is to provide a brake structure which readily produces a relatively strong braking force even at wet times.

The above object is fulfilled, according to the present invention, by a bicycle brake apparatus as defined in independent claim 1.

With the brake apparatus having the above construction, the interlock device has an improved input-output ratio to press the brake elements upon the braked member with a greater force than in the prior art even when the same operating force is applied to the brake lever as in the prior art. At wet times, even if the rubber-like base material fails to perform the braking function because of the liquid layers, the hard friction material will cut the liquid layers to apply the brakes to the braked member. This is an improvement upon the braking force produced by the rubber-like base material without the hard friction material. The braking force produced by this brake apparatus is further improved by the hard friction material applying a still greater frictional resistance to the braked member, which is based on the pressing force increased by the improved input-output ratio of the operating force amplifying device. That is, the strong braking force is produced both by the liquid layer cutting function of the hard friction material and by the strong pressing force applied from the brake elements to the braked member.

Consequently, a reliable braking force is produced even at wet times, only by operating the brake lever relatively lightly. This facilitates a braking operation, and provides the advantage of stopping the bicycle through a relatively short braking distance.

Further and other objects, features and effects of the invention will become more apparent from the following more detailed description of the embodiments of the invention taken with reference to the accompanying drawings.

BRIEF DESCRIPTION OF THE DRAWINGS

Fig. 1 is a front view showing principal portions of a cantilever type caliper brake,
Fig. 2 is a graph showing braking forces applied from brake elements to a rim of a bicycle wheel as a function of the number of braking actions taken at dry and wet times,
Fig. 3 is a view showing a method of calculating a mean braking force at dry times,
Fig. 4 is a view showing a method of calculating a mean braking force at wet times,
Fig. 5 is a view showing measurements of braking forces at dry, wet and dusty times,
Fig. 6 is a graph showing maximum and minimum braking forces in the data shown in Fig. 5,
Fig. 7 is a view showing maximum braking forces at dry and wet times of brake elements according to the present invention and of unmodified brake elements, and
Fig. 8 is a view showing variations in the braking
forces at dry times of the brake elements according to the present invention and of the unmodified brake elements.

DETAILED DESCRIPTION OF THE PREFERRED EMBODIMENT

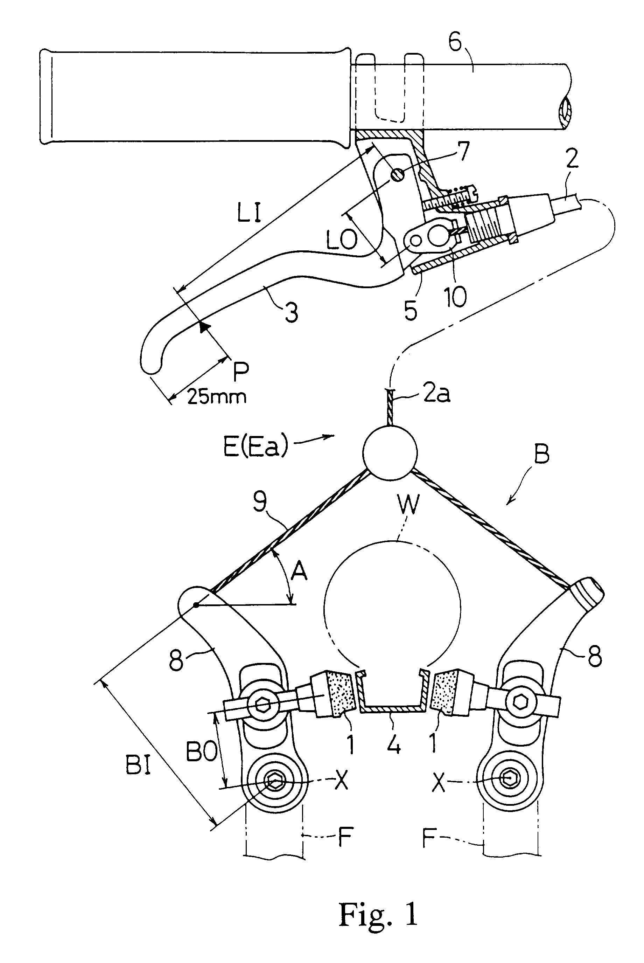

Fig. 1 shows an exposed type brake apparatus of a bicycle, which includes a main brake assembly B having a pair of exposed brake shoes 1 acting as brake elements, a brake cable 2, and a lever device having a brake lever 3. This brake apparatus is operable by causing pivotal movement of the brake lever 3. A manual operating force applied to the brake lever 3 moves the brake elements 1 into pressure contact with a wheel rim 4, thereby to brake a wheel W by friction.

As clearly seen from Fig. 1, the brake lever 3 is attached through a lever bracket 5 to a flat bar type handlebar 6 to be pivotable about a pivotal axis 7 provided by the lever bracket 5.

The main brake assembly B forms a cantilever brake including a pair of brake calipers 8 for supporting the brake elements 1, respectively. The brake calipers 8 are attached to bicycle frames F opposed to each other across the wheel W. Each of the brake calipers 8 is pivotable relative to the frame F about an axis X.

A mechanical interlock mechanism E for interlocking the pair of brake elements 1 to the brake lever 3 includes a cable connector 9 attached to one of the brake calipers 8, the brake cable 2, and a cable connector 10 attached to the brake lever 3.

The brake cable 2, in use condition, has an inner wire 2a connected at one end thereof to the cable connector 9 and to the brake caliper 8 not having the cable connector 9, and at the other end thereof to the cable connector 10. The brake cable 2 in use transmits an operating force resulting from pivotal movement of the brake lever 3 to the brake calipers 8 for causing pivotal movement of the latter. Thus, the interlock mechanism E operatively connects the brake lever 3 to the brake elements 1, so that the operating force is mechanically transmitted from the brake lever 3 to the brake elements 1 pivotable with the brake calipers 8. As a result, the brake elements 1 are movable into contact with the wheel rim 4 from positions separated therefrom.

That is, when the brake lever 3 is moved toward the handlebar 6, the operating force transmitted through the brake cable 2 causes the right and left brake calipers 8 to pivot toward the wheel W. Consequently, both of the brake elements 1 press upon side surfaces of the wheel rim 4 to apply a frictional braking force.

When the brake lever 3 is released, the brake cable 2 is relaxed to allow the brake calipers 8 to pivot away from the wheel W under the biasing forces of return springs (not shown) provided on proximal regions of the respective calipers 8. As a result, the brake elements 1 retract from the side surfaces of the wheel rim 4 to eliminate the braking force.

The brake elements 1 are formed of modified nitrile butadiene rubber (hereinafter called modified NBR) compounded as shown in Table 1 below, to have granules of aluminum oxide dispersed at least over surfaces thereof. The interlock mechanism E has an input-output ratio to provide the brake elements 1 with optimal braking characteristics for use. Thus, when the wheel rim 4 is dry, a braking operation is effected in a way to avoid excessive braking. When the wheel rim 4 is wet with rainwater or dew, a braking operation is effected relatively reliably despite liquid layers formed on surfaces of the wheel rim 4.

Table 1

| Counpounding table | | |
|---|---|---|
| | brake elements 1 of modified NRB | brake elements of unmodified NBR |
| NBR<br>carbon black | 100.0 (parts by weight)<br>50 - 70 | 100.0 (parts by weight) |
| friction substances<br>  aluminum oxide<br>  ion oxide | <br>100.0<br>50.0 | <br>-<br>- |
| vulcanizing agent<br>sulfur | <br>7.8 | <br>4.8 |

The brake elements 1 formed of modified NBR produce a decreased braking force at dry times, compared with unmodified brake elements formed of unmodified nitrile butadiene rubber (hereinafter called unmodified NBR) having no hard friction material such as aluminum oxide. The brake elements 1 produce an increased braking force at wet times, compared with the unmodified brake elements. That is, when dry, nitrile butadiene rubber (NBR) readily makes tight contact with the wheel rim to apply a great frictional resistance by means of aluminum oxide. When wet, the liquid layers on the surfaces of the wheel rim may nullify the frictional resistance from NBR. However, aluminum oxide, because of its hardness, cuts the liquid layers to grip the wheel rim and apply a frictional resistance thereto.

Where the unmodified brake elements are used, an operating force amplifying device is provided for an unmodified mode interlock mechanism Ea operatively connecting the brake elements to the brake lever 3. This device includes a ratio between an input arm length LI and an output arm length LO of the brake lever 3 (Fig. 1), an input-output ratio of the brake calipers 8, and a connecting angle A of the connector 9 or inner wire 2a relative to one of the brake calipers 8 when the brake elements contact the wheel rim 4, which are as set forth in table 2 below. This causes the unmodified brake elements to contact the wheel rim 4 under a predetermined pressure to produce an appropriate braking force at dry times. Where, as in this embodiment, the brake elements 1 are formed of modified NBR, the interlock mechanism E has an operating force amplifying device including a ratio between the input arm length LI and output arm length LO of the brake lever 3, an input-output ratio of the brake calipers 8, and a connecting angle A of the connector 9 or inner wire 2a relative to one of the brake calipers 8 when the brake elements 1 contact the wheel rim 4, which are as set forth in table 2. In the latter case, the interlock mechanism E provides an output about 6.65 times greater than an input.

Thus, the interlock mechanism E has an input-output ratio about 1.12 times greater than the unmodified mode interlock mechanism Ea, thereby to cause the brake elements 1 to contact the wheel rim 4 under a greater pressure when the same operating force P is applied to the brake lever 3. With the increased input-output ratio, the brake elements 1 apply substantially the same braking force as the unmodified brake elements at dry times. At wet times, the brake elements 1 apply a far greater breaking force than the unmodified brake elements.

Table 2

| | mechanism Ea for unmodified brake elements | mechanism E for modified brake elements 1 |
|---|---|---|
| LI/LO of lever 3 | about 3.38 | about 3.78 |
| BI/2x BOxSin A of calipers 8 | about 1.76 | about 1.76 |
| ourput/input | about 5.949 | about 6.653 |
| connecting angle A | about 41.4° | about 41.4° |

BI: input arm length,and B: output arm length (see Fig. 1)

$$\frac{\text{input-output ratio of interlock mechanism E}}{\text{input-output ratio of intelock mechanism Ea}} = \frac{6.653}{5.949} \cong 1.12$$

That is, though the brake elements 1 used apply a reduced braking force at dry times compared with the unmodified brake elements, the increased input-output ratio of the interlock mechanism E provides an additional pressure for the brake elements 1 to compensate for the reduced braking force. Consequently, the brake elements 1 apply substantially the same braking force as the unmodified brake elements at dry times. At wet times, the brake elements 1 used apply a greater braking force than the unmodified brake elements. The increased input-output ratio of the interlock mechanism E provides the additional pressure for the brake elements 1, thereby further increasing the pressing force of the brake elements 1 at wet times. As a result, the pressing force applied at wet times is close to the pressing force applied at dry times.

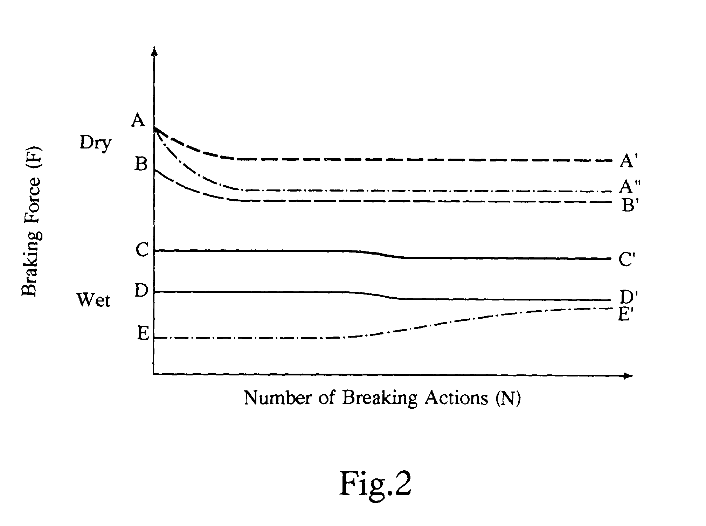

The above fact is clear from the results of braking tests, as shown in Fig. 2, which were conducted on the brake elements 1 formed of modified NBR and the unmodified brake elements.

The braking tests used, as the object braked, an aluminum wheel rim having alumite layers formed 2 to 6 micrometers thick on the surfaces thereof.

The entire mass of the bicycle including the rider was 100kg. The speed was set to 12.5km/h. An operational input P=180N was applied to a position 25mm from the tip end of the brake lever 3 as shown in Fig. 1.

As the wetness condition, the wheel was wetted with water running at a rate of 0.3 to 0.4 liters per minute.

In Fig. 2, the horizontal axis represents the number of braking actions (N), and the vertical axis represents braking forces F. Where the unmodified brake elements were connected to the brake lever through the unmodified mode interlock mechanism Ea, a braking force shown in line A-A" was produced at a dry time, and a braking force shown in line E-E' was produced at a wet time.

At the dry time, a steady period appears in which the braking force shows little variation regardless of the number of braking actions (N). The braking force is slightly less in the steady period than in an initial braking period. At the wet time also, a steady period appears in which the braking force shows little variation regardless of the number of braking actions (N). In this steady period, the braking force is slightly improved over the braking force in the initial braking period.

Where the brake elements 1 formed of modified NBR were connected to the brake lever through the unmodified mode interlock mechanism Ea, a braking force shown in line B-B' was produced at the dry time, and a braking force shown in line D-D' was produced at the wet time. The braking force is less at the wet time than at the dry time, but is an improvement upon the braking force (E-E') produced by the unmodified brake elements at the wet time.

At the dry time, a steady period appears in which the braking force shows little variation regardless of the number of braking actions (N). The braking force is slightly less in the steady period than in the initial braking period. At the wet time also, a steady period appears in which the braking force shows little variation regardless of the number of braking actions (N). The braking force is slightly less in this stead period than in the initial braking period.

Where the brake elements 1 formed of modified NBR were connected to the brake lever through the interlock mechanism E, a braking force shown in line A-A' was produced at the dry time, and a braking force shown in line C-C' was produced at the wet time.

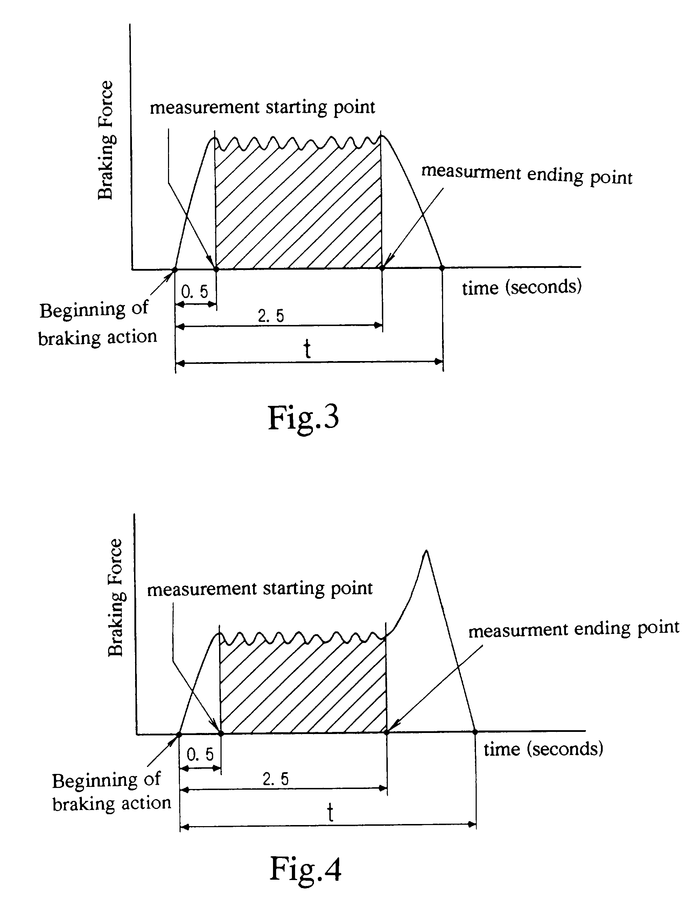

The braking forces F shown in Fig. 2 were derived from the computing methods shown in Figs. 3 and 4. At the dry time, as shown in Fig. 3, the wheel was stopped upon lapse of a braking time "t" from the beginning of the braking action, during which little variation occurred in the braking force. At the wet time, as shown in Fig. 4, the wheel was stopped upon lapse of a braking time "t" from the beginning of the braking action, during which the braking force reaches a maximum when the wheel is stopped. At both the dry time and wet time, measurement was started 0.5 seconds from the beginning of the braking action, and was ended after at least 2.5 seconds from the beginning of the braking action. The mean value of each measurement was regarded as the braking force F.

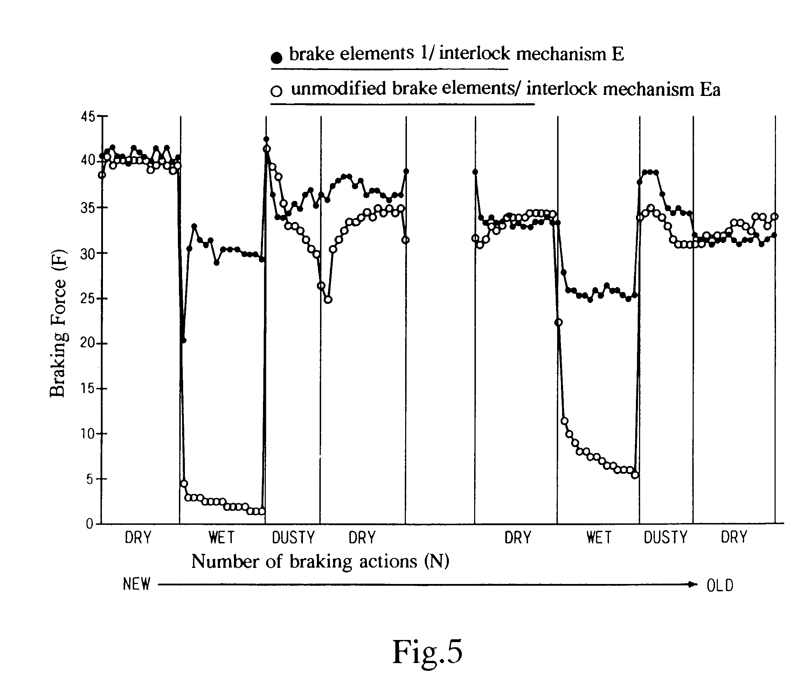

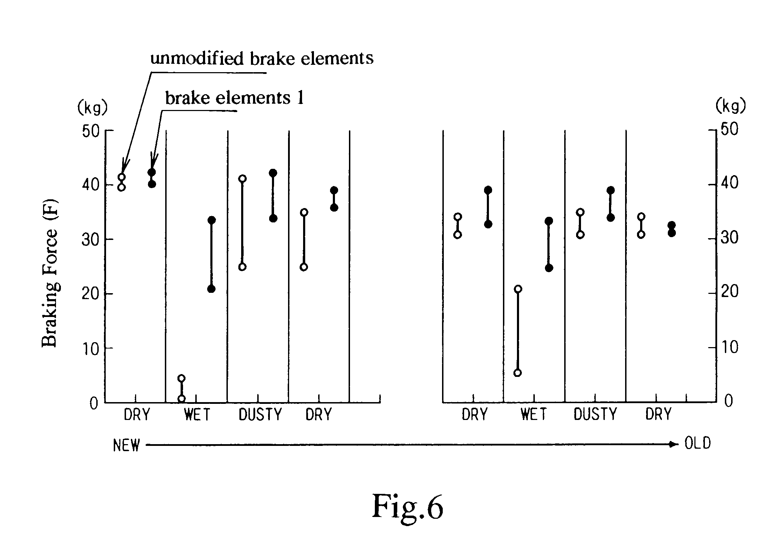

Figs. 5 and 6 show the results of further braking tests conducted on the brake elements 1 formed of modified NBR and the unmodified brake elements.

These braking tests also used an aluminum wheel rim having alumite layers formed 2 to 6 micrometers thick on the surfaces thereof. The wheel was braked in a dry condition (DRY), a wet condition (WET), and a dusty condition with sand adhering to the wheel rim (DUSTY).

The entire mass of the bicycle including the rider was 100kg. The front wheel was braked. The speed was set to 25km/h. An operational input P= 14kg was applied to the position 25mm from the tip end of the brake lever 3 as shown in Fig. 1. As the wetness condition, the wheel was wetted with water running at a rate of 600cc per minute. The brake elements 1 were connected to the brake lever through the interlock mechanism E having an input-output ratio at about 6.653 as shown in Table 2. The unmodified brake elements were connected to the brake lever through the interlock mechanism Ea having an input-output ratio at about 5.949 as shown in Table 2.

In Figs. 5 and 6, the horizontal axis represents the number of braking actions (N), and the vertical axis represents braking forces F. The black circles in these figures show test results of the brake elements 1 formed of modified NBR, and the white circles show results of the unmodified brake elements. Fig. 5 shows that testing was carried out plural times in each of the dry condition (DRY), wet condition (WET) and dusty condition (DUSTY). Fig. 6 clearly shows a difference between a maximum braking force and a minimum braking force produced in each condition.

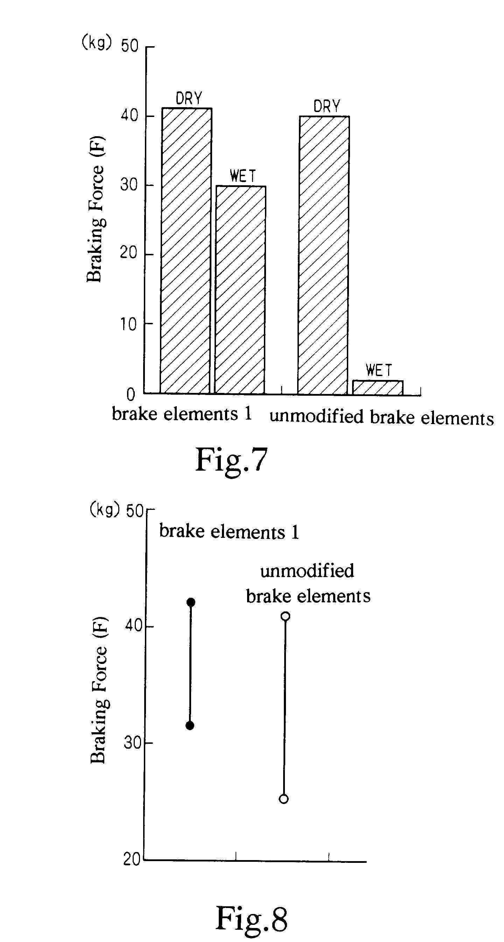

As seen from Fig. 7, the brake elements 1 formed of modified NBR produce approximately the same braking force as the unmodified brake elements at the dry time. The brake elements 1 produce a stronger braking force than the unmodified brake elements at the wet time. As seen from Fig. 8, the brake elements 1 formed of modified NBR used in the dry condition (DRY) exhibit a less variation in braking performance than the unmodified brake elements.

The brake elements 1 formed of modified NBR produce braking forces in the dry condition (DRY) and wet condition (WET) as shown in Figs. 5 and 6. Furthermore, the testing conditions were such that the operational input P applied to the brake lever was 14kg which is less than 180N (180N=18.37kg), and the bicycle speed was 25km/h which is faster than 12.5km/h.

Thus, with use of the brake elements 1 formed of modified NBR and the interlock mechanism E, and under the testing conditions where the entire mass of the bicycle including the rider is 100kg, the operational input P applied to the brake lever is 180N, and the bicycle speed is 12.5km/h, a braking force of at least 14.3kg is applied to the front wheel and at least 10.2kg to the rear wheel at wet times, and a braking force of at least 28.6kg is applied to the front wheel and at least 20.4kg to the rear wheel at dry times. In addition, a braking force of at least 22.4kg may be applied to the front wheel and at least 14.3kg to the rear wheel at wet times, and a braking force of at least 34.7kg may be applied to the front wheel and at least 22.4kg to the rear wheel at dry times.

The arm ratios of the brake lever shown in Table 2 are derived from a brake lever for use on a flat bar type handlebar, and correspond to values taken when the brake lever is in a position to begin pulling the cable and in an intermediate position adjacent a bottom-up. Further, these ratios are valid where each brake element is disposed in a middle position of a mounting bore of the brake caliper.

Aluminum oxide may be used in a relatively large quantity in forming the brake elements 1. Then, a strong braking force may be produced even when the aluminum wheel rim is wet, which is based on both the liquid layer cutting function and the increase in the pressure applied to the brake elements 1 through the interlock mechanism E. Despite the strong braking force, an excessive braking effect may readily be avoided in the dry condition.

That is, sulfur mixed in a relatively large quantity results in strong bonding of NBR. This bonding strength is effective to prevent peeling of aluminum oxide at braking times. Thus, aluminum oxide may be mixed in a relatively large quantity to enable high-precision braking at wet times, which is based on the liquid layer cutting function, and to realize a marked decrease in the braking force at dry times compared with the unmodified brake elements.

Aluminum oxide has hardness 9 on the Mohs' scale. Even with an aluminum rim, the brake elements 1 including aluminum oxide cut liquid layers on rim surfaces and reliably grip the rim to apply the brakes thereto. Red oxide is softer than the alumite layers on the surfaces of the aluminum rim. Thus, at dry times, the brake elements 1 produce excellent braking forces despite aluminum oxide mixed therein.

Other embodiments of the invention will be described next.

The brake elements may, instead of directly braking the wheel rim, apply the braking force to an element attached specially for the braking purpose to the wheel. The wheel rin and such special element are collectively called herein a braked member 4.

The brake elements 1 may have the following composition.

NBR may be replaced with one of varied synthetic rubbers, such as styrene-butadiene rubber (SBR). A synthetic resin or natural rubber may be used instead. These substances are collectively called herein a rubber-like base material.

The liquid layer cutting function is realized by employing a substance as hard as or harder than the braked member, as exemplified in Table 3. These substances are collectively called herein a hard friction material. If the hard friction material is mixed in a quantity less than 30 parts by weight with 100 parts by weight of the rubber-like base material, the water cutting effect is impaired to jeopardize the braking performance. If the quantity of the friction material is larger than 300 parts by weight, the brake elements will be unfit to use from the point of view of durability. Thus, the hard friction material may be mixed in 30 to 300 parts by weight.

Table 3

| types of braked member (wheel rim) | Mohs' hardness of usable hard friction material |
|---|---|
| steel (not plated) | 4.5 or above |
| steel (chrome plated) | 9 or above |
| aluminu m (alumite finished) | 9 or above |

Depending on the material of the wheel rim to be braked, red oxide may be replaced with titanium oxide (TiO) or stannic oxide ($SnO_2$). In other words, a substance softer than the braked member may be employed.

Sulfur may advantageously be mixed in a relatively large quantity, to act as the vulcanizing agent, with 100 parts by weight of the rubber-like base material. This strengthens bonding of the rubber-like base material, whereby the rubber-like base material holds the hard friction material with increased strength. If sulfur is mixed in a quantity larger than 20 parts by weight, the brake elements become too hard for use. Where a vulcanization accelerator including sulfur is used, this sulfur will perform the vulcanizing function. The sulfur acting as the vulcanizing agent may be mixed in about 0.2 parts by weight to produce a desired vulcanizing effect. Consequently, the vulcanizing agent may be mixed in 0.2 to 20 parts by weight with 100 parts by weight of the rubber-like base material.

For the improved input-output ratio of the interlock mechanism E, only the brake lever device may be used as in the foregoing embodiment, which device has the improved ratio between input arm length and output arm length of the brake lever. Instead, a brake caliper device having an improved ratio between input arm length and output arm length of each caliper, or a brake cable device having an improved transmission efficiency of the brake cable, may be used. A combination of two or three of the brake lever device, brake caliper device and brake cable device may be used.

Besides the brake apparatus for use on the flat bar type handlebar, the present invention is applicable to a brake apparatus for use on a dropped handlebar. That is, the invention is applicable to varied brake apparatus having a main lever only or an extension lever.

An interlock mechanism for operating brake elements having a hard friction material, of a conventional brake apparatus used on a dropped handlebar, as a whole provides an input-output ratio at 4.54 when a main lever is operated to apply the brakes. Such an interlock mechanism as a whole provides an input-output ratio at 5.77 when an extension lever is operated to apply the brakes. An interlock mechanism of a conventional brake apparatus for use on a flat bar type handlebar, as a whole provides an input-output ratio at 4.14.

In the brake apparatus according to the present invention, when used on a dropped handlebar, the interlock mechanism as a whole provides an input-output ratio greater than 4.54 when a main lever is operated to apply the brakes. This interlock mechanism as a whole provides an input-output ratio greater than 5.77 when an extension lever is operated to apply the brakes. The improved input-output ratios produce increased pressing forces, thereby fulfilling the object of the present invention to realize strong braking forces at wet times.

## Claims

1. A bicycle brake apparatus comprising:

   a brake lever (3);
   a brake element (1) for applying braking force against a bicycle wheel (4);
   an interlocking device extending between said brake lever and said brake element
   for transmitting an operating force of said brake lever to said brake element;

**characterized in that**
said brake element (1) includes rubber base material and aluminium oxide contained in a quantity 30 to 300 per cent by weight of said rubber base material, and that said interlocking device amplifies said operating force of said brake lever more than 4.54 times to press said brake element against said bicycle wheel.

2. A brake apparatus as defined in claim 1 **characterized in that**
said interlocking device amplifies said operating force of said brake lever about 6.65. times to press said brake element against said bicycle wheel.

3. A brake apparatus as defined in claim 2 **characterized in that** said brake apparatus includes a cantilever type brake apparatus which mounts the brake element at a free end and is oscillated by a cable attached to another end, and that a ratio of an input arm length (Li) to an output length (Lo) is substantially 3.78 and a ratio of an input caliper arm length (Bi) to an output caliper arm length (Bo) is substantially 1.76 and an angle A between a brake cable and a direction in which said brake arm is extended at a point of connection is substantially 41 degrees.

4. A brake apparatus as defined in claim 1 **characterized in that** said rubber base material is nitrile butadiene rubber.

**Patentansprüche**

1. Fahrradbremsvorrichtung, umfassend:

einen Bremshebel (3);
ein Bremselement (1), mit dem eine Bremskraft auf ein Fahrradrad (4) ausgeübt wird;
eine Übertragungsvorrichtung, die sich zwischen dem Bremshebel und dem Bremselement erstreckt, um eine Betätigungskraft von dem Bremshebel auf das Bremselement zu übertragen;
**dadurch gekennzeichnet, daß**
das Bremselement (1) Gummi als Basismaterial sowie Aluminiumoxid beinhaltet, das in einer Menge von 30 bis 300 Gew.-% des als Basismaterial verwendeten Gummis enthalten ist, und daß die Übertragungsvorrichtung die Betätigungskraft des Bremshebels um mehr als das 4,54-fache verstärkt, um das Bremselement gegen das Fahrradrad zu drücken.

2. Bremsvorrichtung nach Anspruch 1, **dadurch gekennzeichnet, daß**
die Übertragungsvorrichtung die Betätigungskraft des Bremshebels etwa um das 6,65-fache verstärkt, um das Bremselement gegen das Fahrradrad zu drücken.

3. Bremsvorrichtung nach Anspruch 2, **dadurch gekennzeichnet, daß** die Bremsvorrichtung eine Ausleger-Bremsvorrichtung umfaßt, bei der das Bremselement an einem freien Ende befestigt ist und durch ein an dem anderen Ende befestigtes Kabel hin- und herbewegt wird, und daß das Verhältnis einer Eingangsarmlänge (Li) zu einer Ausgangsarmlänge (Lo) im wesentlichen 3,78 beträgt, und daß das Verhältnis einer Eingangsarmlänge (Bi) zu einer Ausgangsarmlänge (Bo) eines Greifers im wesentlichen 1,76 beträgt, und daß ein Winkel A an einem Verbindungspunkt zwischen einem Bremskabel und einer Richtung, in der sich der Bremsarm erstreckt, im wesentlichen 41 Grad beträgt.

4. Bremsvorrichtung nach Anspruch 1, **dadurch gekennzeichnet, daß** der als Basismaterial verwendete Gummi Nitril-Butadien-Gummi ist.

**Revendications**

1. Structure de frein pour bicyclette comprenant :

un levier de frein (3) ;
un élément de frein (1) destiné à appliquer la force de freinage contre la roue de bicyclette (4)
un dispositif d'interblocage s'étendant entre le levier de frein et l'élément de frein ;
pour transmettre une force opérante du levier de frein à l'élément de frein ;
caractérisée en ce que
l'élément de frein (1) comprend un matériau à base de caoutchouc et d'oxyde d'aluminium contenu dans une quantité de 30 à 300 % en poids du matériau de base en caoutchouc, et en ce que le dispositif d'interblocage amplifie la force opérante du levier de frein plus de 4,54 fois pour comprimer l'élément de frein contre la roue de bicyclette.

2. Structure de frein selon la revendication 1, caractérisée en ce que
   le dispositif d'interblocage amplifie la force opérante du levier de frein d'environ 6,65 fois pour comprimer l'élément de frein contre la roue de bicyclette.

3. Structure de frein selon la revendication 2, caractérisée en ce que la structure de frein comprend une structure de frein du type en porte-à-faux qui supporte l'élément de frein selon un angle libre et est mis en oscillation par un câble fixé sur une autre extrémité, en ce que le rapport de la longueur du bras d'entrée (Li) et la longueur de sortie (Lo) est sensiblement de 3,78 et le rapport entre la longueur du bras d'étrier d'entrée (Bi) et la longueur du bras d'étrier de sortie (Bo) est sensiblement de 1,76 et l'angle A entre le câble de frein et la direction dans laquelle s'étend le bras de frein en un point de liaison est sensiblement de 41 degrés.

4. Structure de frein selon la revendication 1, caractérisée en ce que le matériau à base de caoutchouc est du caoutchouc de nitrile butadiène.

Fig. 1

Fig.2

Fig.3

Fig.4

● brake elements 1/ interlock mechanism E

○ unmodified brake elements/ interlock mechanism Ea

Fig.5

Fig.6

Fig.7

Fig.8